# EUROPÄISCHE PATENTSCHRIFT

(11) **EP 2 849 250 B1**
(45) Veröffentlichungstag und Bekanntmachung des Hinweises auf die Patenterteilung: **07.06.2017**
(21) Anmeldenummer: 14179840.5
(22) Anmeldetag: 05.08.2014
(51) Int. Cl.: H01M 2/10, H01M 10/6551, H01M 10/6555, H01M 10/643, H01M 10/6235, H01M 10/613, H01M 2/20, H01M 2/30

(54) **Wiederaufladbare Batterie mit Wärmeableitelement**
Rechargeable battery with heat dissipatation element
Pile rechargeable avec l'élément de dissipation de chaleur

(30) Priorität: 16.09.2013 DE 102013218527
(43) Veröffentlichungstag der Anmeldung: 18.03.2015
(73) Patentinhaber: ROBERT BOSCH GMBH, 70442 Stuttgart (DE)
(72) Erfinder: Zahn, Wolf, 70439 Stuttgart (DE); Baumgartner, Josef, 70376 Stuttgart (DE)

(56) Entgegenhaltungen:
- EP-A1- 0 869 571
- EP-A1- 0 994 523
- EP-A1- 1 274 137
- EP-A2- 0 940 864
- EP-A2- 1 309 019
- WO-A1-2014/079507
- US-B1- 6 692 864
- US-B1- 6 783 886

## Beschreibung

### Stand der Technik

Es ist bereits ein Akku, insbesondere ein Werkzeugakku, mit zumindest einem Zellblock, der zumindest ein Wärmeableitelement aufweist, das dazu vorgesehen ist, eine Wärme aus dem Zellblock abzuleiten, und mit einem Akkugehäuse, das zumindest ein Wärmeabstrahlelement aufweist, das dazu vorgesehen ist, die von dem Wärmeableitelement abgeleitete Wärme an eine Umgebung wenigstens abzustrahlen, vorgeschlagen worden.

### Offenbarung der Erfindung

Die Erfindung geht aus von einem Akku, insbesondere einem Werkzeugakku, mit zumindest einem Zellblock, der zumindest ein Wärmeableitelement aufweist, das dazu vorgesehen ist, eine Wärme aus dem Zellblock abzuleiten, und mit einem Akkugehäuse, das zumindest ein Wärmeabstrahlelement aufweist, das dazu vorgesehen ist, die von dem Wärmeableitelement abgeleitete Wärme an eine Umgebung wenigstens abzustrahlen.

Es wird vorgeschlagen, dass das Wärmeableitelement und das Wärmeabstrahlelement als voneinander getrennt ausgebildete Bauteile gebildet sind. Insbesondere soll unter einem "Werkzeugakku" ein Akku verstanden werden, der dazu vorgesehen ist, ein Werkzeug mit elektrischer Energie zu versorgen. Insbesondere soll unter einem "Werkzeug" ein, dem Fachmann als sinnvoll erscheinendes Werkzeug, vorteilhaft jedoch eine Bohrmaschine, ein Bohrhammer, ein Schlaghammer, eine Säge, ein Hobel, ein Schrauber, eine Fräse, ein Schleifer, ein Winkelschleifer, ein Baustellenmessgerät, ein Multifunktionswerkzeug und/oder vorteilhaft ein Gartengerät, insbesondere ein Rasenmäher, verstanden werden. Alternativ oder zusätzlich könnte der Akku dazu vorgesehen sein, ein zumindest teilweise elektrisch angetriebenes Fahrrad mit elektrischer Energie zu versorgen. Insbesondere ist der Akku von einem Bediener zur Versorgung eines Geräts mit dem Gerät zerstörungsfrei und insbesondere werkzeuglos verbindbar und von dem Gerät trennbar. Unter einem "Zellblock" soll insbesondere eine Einheit mit mehreren Akkuzellen verstanden werden, die dazu vorgesehen sind, eine elektrische Energie insbesondere an ein Werkzeug abzugeben. Vorzugsweise umfasst der Zellblock zumindest zwei Akkuzellen, vorteilhaft zumindest acht Akkuzellen, besonders vorteilhaft zumindest 16 Akkuzellen. Vorteilhaft sind die Akkuzellen relativ zueinander ortsfest angeordnet. Besonders vorteilhaft ordnet das Wärmeableitelement die Akkuzellen relativ zueinander an. Insbesondere weist der Zellblock ein Zellblockgehäuse auf, das dazu vorgesehen ist, das Wärmeableitelement und vorteilhaft damit die Akkuzellen aneinander zu befestigen. Insbesondere bildet der Zellblock zumindest bei einem Montageschritt eine Baugruppe. Bevorzugt ist der Zellblock dazu vorgesehen, eine elektrische Energie mit einer Spannung größer 12 Volt, besonders vorteilhaft größer 20 Volt, bereitzustellen. Insbesondere ist der Zellblock dazu vorgesehen, eine elektrische Energie mit einer Spannung kleiner 50 Volt bereitzustellen. Insbesondere weist der Zellblock, und damit der Akku, eine Speicherkapazität von weniger als 2000 Wattstunden, vorteilhaft weniger als 750 Wattstunden, besonders vorteilhaft weniger als 250 Wattstunden, auf. Insbesondere weist der Zellblock, und damit der Akku, eine Speicherkapazität von mehr als 2 Wattstunden, vorteilhaft mehr als 25 Wattstunden, besonders vorteilhaft mehr als 100 Wattstunden, auf. Insbesondere soll unter einem "Wärmeableitelement" ein Element verstanden werden, das eine Wärmeleitfähigkeit größer als 5 W/(m K), vorteilhaft größer als 25 W/(m K), besonders vorteilhaft größer als 100 W/(m K), aufweist. Insbesondere ist das Wärmeleitelement als ein Metallteil ausgebildet, vorteilhaft als ein Aluminiumteil, besonders vorteilhaft als ein Aluminiumprofil. Alternativ könnte das Wärmeleitelement aus einem anderen, dem Fachmann als sinnvoll erscheinenden Material ausgebildet sein, beispielsweise aus Kohlenstoff, und/oder ein, dem Fachmann als sinnvoll erscheinendes Wärmeleitmittel aufweisen, beispielsweise eine Heatpipe und/oder Kohlenstoffnanoröhrchen. Vorzugsweise ist das Wärmeableitelement dazu vorgesehen, die Akkuzellen zu positionieren. Insbesondere ist das Wärmeableitelement dazu vorgesehen, die Akkuzellen vor mechanischen Einwirkungen zu schützen. Vorteilhaft ist das Wärmeableitelement dazu vorgesehen, zumindest im Vergleich zu anderen Akkuzellen innenliegende Akkuzellen zu kühlen. Bevorzugt weist das Wärmeleitelement entlang einer Geraden eine Erstreckung auf, die zumindest 25 %, vorteilhaft zumindest 50 %, besonders vorteilhaft zumindest 75 %, einer Erstreckung des Zellblocks auf der Geraden beträgt. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere soll unter einer "Wärme" eine bei einem Laden und Entladen des Zellblocks in den Akkuzellen entstehende Verlustwärme verstanden werden. Unter dem Begriff "ableiten" soll in diesem Zusammenhang insbesondere verstanden werden, dass das Wärmeableitelement die Akkuzellen in zumindest einem Betriebszustand kühlt. Insbesondere leitet das Wärmeableitelement oder ggf. leiten die Wärmeableitelemente des Zellblocks einen wesentlichen Anteil der in den Akkuzellen entstehenden und abgeleiteten Wärme ab, das heißt insbesondere in zumindest einem Betriebszustand mehr als 30 % der insgesamt abgeleiteten Wärme, vorteilhaft mehr als 50 % der insgesamt abgeleiteten Wärme, besonders vorteilhaft mehr als 75 % der insgesamt abgeleiteten Wärme. Insbesondere soll unter einem "Akkugehäuse" eine Einheit verstanden werden, die dazu vorgesehen ist, zumindest den Zellblock vor mechanischen Einwirkungen von außen zu schützen. Vorzugsweise umschließt das Akkugehäuse den Zellblock zumindest im Wesentlichen vollständig, das heißt insbesondere umschließt das Akkugehäuse einen Mittelpunkt des Zellblocks auf zwei zueinander senkrechten Ebenen um mehr als 270 Grad. Insbesondere bildet das Wärmeabstrahlelement zumindest einen Teil des Akkugehäuses. Unter einem "Wärmeabstrahlelement" soll insbesondere ein Element verstanden werden, das dazu vorgesehen ist, die aus dem Zellblock abgeleitete Wärme an eine Umgebung abzugeben, und zwar zumindest abzustrahlen. Vorteilhaft gibt das Wärmeabstrahlelement zusätzlich einen Teil der abgeleiteten Wärme durch Konduktion und insbesondere Konvektion an eine umgebende Luft ab. Bevorzugt bildet das Wärmeabstrahlelement zumindest eine Außenfläche des Akkus. Insbesondere weist das Wärmeabstrahlelement an der Außenfläche Kühlrippen, eine schwarze Färbung und/oder eine Beschichtung auf, die zur Optimierung einer Wärmeabstrahlung vorgesehen ist. Vorzugsweise weist das Akkugehäuse mehrere Wärmeabstrahlelemente auf, die besonders bevorzugt an unterschiedlichen Außenseiten des Akkus angeordnet sind. Alternativ könnte das Akkugehäuse genau ein Wärmeabstrahlelement aufweisen, das insbesondere auf mehreren Seiten und vorteilhaft auf genau einer Seite des Akkus angeordnet ist. Des Weiteren könnte das Akkugehäuse zumindest drei, vorteilhaft zumindest vier oder besonders vorteilhaft zumindest fünf Wärmeabstrahlelemente aufweisen, die besonders bevorzugt an unterschiedlichen Außenseiten des Akkus angeordnet sind. Insbesondere soll unter der Wendung "als voneinander getrennt ausgebildete Bauteile gebildet" verstanden werden, dass das Wärmeableitelement und das Wärmeabstrahlelement in zumindest einem Montageschritt als zwei verschiedene Bauteile ausgebildet sind. Vorteilhaft sind das Wärmeableitelement und das Wärmeabstrahlelement nach einer Montage stoffschlüssig, formschlüssig und/oder kraftschlüssig miteinander verbunden. Besonders vorteilhaft sind das Wärmeableitelement und das Wärmeabstrahlelement nach einer Montage formschlüssig und kraftschlüssig miteinander verbunden. Durch die erfindungsgemäße Ausgestaltung des Akkus kann eine vorteilhafter Schutz des Zellblocks, insbesondere vor Staub und/oder Feuchtigkeit, konstruktiv einfach möglich sein.

Der Akku weist eine Dichtvorrichtung auf, die dazu vorgesehen ist, den Zellblock wenigstens staubdicht und/oder wasserdicht zu verschließen, wodurch der Akku vorteilhaft bei Außenarbeiten bei schlechtem Wetter verwendet werden kann. Unter einer "Dichtvorrichtung" soll insbesondere eine, dem Fachmann als sinnvoll erscheinende Vorrichtung verstanden werden, die dazu geeignet ist, ein Eindringen von Staub und/oder Feuchtigkeit in den Zellblock zu verhindern. Insbesondere verhindert die Dichtvorrichtung ein Eindringen von Staub und/oder Feuchtigkeit in einen insbesondere im Wesentlichen gesamten Bereich zwischen den Akkuzellen des Zellblocks. Insbesondere soll unter einer "Dichtvorrichtung" nicht eine Vorrichtung verstanden werden, die eine einzelne Akkuzelle abdichtet oder isoliert. Insbesondere soll unter der Wendung "wenigstens staubdicht und/oder wasserdicht" verstanden werden, dass die Dichtfolie in zumindest einem Betriebszustand ein Eindringen von Wasser und/oder Staub in den Zellblock verhindert. Vorzugsweise schützt die Dichtfolie den Zellblock gemäß der Norm IEC 60529 zumindest mit der Schutzklasse IP55, vorzugsweise IP67, besonders bevorzugt IP68. Vorzugsweise sind elektrische Kontakte des Akkus, insbesondere Energiekontakte und Kommunikationskontakte des Akkus, ein einem Bereich angeordnet, der außerhalb eines von der Dichtvorrichtung geschützten Bereichs liegt. Unter "verschließen" soll insbesondere verstanden werden, dass die Dichtfolie in einem Bereich angeordnet ist, durch den bei fehlender Dichtfolie Wasser und/oder Staub in den Zellblock eindringen kann.

Die Dichtvorrichtung weist eine den Zellblock umschließende Dichtfolie auf, wodurch konstruktiv einfach ein besonders vorteilhafter Schutz vor Staub und/oder Feuchtigkeit erreicht werden kann. Unter dem Begriff "umschließend" soll in diesem Zusammenhang insbesondere verstanden werden, dass die Dichtfolie einen Mittelpunkt des Zellblocks auf zumindest einer Ebene um mehr als 180 Grad, vorteilhaft um mehr als 270 Grad, besonders vorteilhaft um 360 Grad, umgibt. Insbesondere soll unter einer "Dichtfolie" eine Folie verstanden werden, die dazu vorgesehen ist, einen von dem Zellblock aufgespannten Bereich staub- und/oder wasserdicht zu verschließen. Insbesondere ist die Dichtfolie dünner als 1000 µm, bevorzugt dünner als 500 µm und/oder besonders bevorzugt dünner als 200 µm. Vorzugsweise wird die Dichtfolie an Stoßstellen und/oder Übergängen zwischen zwei Bereichen der Dichtfolie stoffschlüssig abgedichtet. Insbesondere ist die Dichtfolie als eine Prägefolie ausgebildet. Vorteilhaft ist die Dichtfolie als eine insbesondere durch Wärmeeinwirkung selbstschrumpfende Folie ausgebildet. Alternativ oder zusätzlich zu der Dichtfolie könnte das Zellblockgehäuse durch die Dichtvorrichtung wasserdicht und/oder staubdicht verschlossen werden. Vorzugsweise ist die Dichtfolie schlauchförmig ausgebildet. Alternativ könnte die Dichtfolie sackförmig ausgebildet sein.

Ferner wird vorgeschlagen, dass die Dichtvorrichtung zumindest teilweise zwischen dem Wärmeableitelement und dem Wärmeabstrahlelement angeordnet ist, wodurch konstruktiv einfach eine Abdichtung an den die Wärme aus dem Zellblock ableitenden Bauteilen möglich ist. Insbesondere soll unter dem Begriff "zwischen" verstanden werden, dass die Dichtvorrichtung, vorteilhaft die Dichtfolie der Dichtvorrichtung, auf einer Geraden liegt, die von der Dichtvorrichtung ausgehend auf einer Seite das Wärmeableitelement und auf der anderen Seite das Wärmeabstrahlelement schneidet. Alternativ oder zusätzlich zu der Dichtfolie könnte ein dünnwandiger Bereich des Zellblockgehäuses flächig zwischen dem Wärmeableitelement und dem Wärmeabstrahlelement angeordnet sein. Vorzugsweise ist die Dichtvorrichtung zumindest teilweise direkt zwischen dem Wärmeableitelement und dem Wärmeabstrahlelement angeordnet, was bedeutet, dass das Wärmeableitelement auf einer ersten Seite eines Bereichs der Dichtvorrichtung und das Wärmeabstrahlelement auf einer der ersten Seite gegenüberliegenden zweiten Seite des Bereichs der Dichtvorrichtung anliegen. Insbesondere sind das Wärmeableitelement und das Wärmeabstrahlelement vollständig durch die Dichtvorrichtung voneinander getrennt, was insbesondere bedeutet, dass das Wärmeableitelement und das Wärmeabstrahlelement nicht aneinander anliegen. Alternativ könnte die Dichtfolie zwischen dem Wärmeableitelement und dem Wärmeabstrahlelement eine Öffnung aufweisen, die von dem Wärmeableitelement und dem Wärmeabstrahlelement und insbesondere einem Dichtmittel abgedichtet wird. Unter einem "Dichtmittel" soll ein, dem Fachmann als sinnvoll erscheinendes Mittel verstanden werden, vorteilhaft jedoch ein Mittel aus thermoplastischem Elastomer, ein Mittel aus Gummi oder ein Mittel aus einer Klebemasse. Vorteilhaft ist das Dichtmittel O-Ring-förmig und/oder vorteilhaft bandförmig ausgebildet.

Zudem wird vorgeschlagen, dass die Dichtvorrichtung dazu vorgesehen ist, einen zumindest wesentlichen Anteil der Wärme von dem Wärmeableitelement auf das Wärmeabstrahlelement zu leiten, wodurch auf einen direkten mechanischen Kontakt zwischen dem Wärmeableitelement und dem Wärmeabstrahlelement verzichtet werden kann. Unter einem "wesentlichen Anteil der Wärme" sollen in zumindest einem Betriebszustand mehr als 25 %, vorteilhaft mehr als 50 %, besonders vorteilhaft mehr als 75 %, der insgesamt abgeleiteten Wärme verstanden werden.

Weiterhin wird vorgeschlagen, dass der Akku eine Koppelvorrichtung aufweist, die dazu vorgesehen ist, das Wärmeableitelement und das Wärmeabstrahlelement aufeinander zuzudrücken, wodurch ein vorteilhaft geringer Wärmewiderstand zwischen dem Wärmeableitelement und dem Wärmeabstrahlelement erreicht werden kann. Unter einer "Koppelvorrichtung" soll insbesondere eine Vorrichtung verstanden werden, die das Wärmeableitelement und das Wärmeabstrahlelement mechanisch aneinander befestigt. Insbesondere soll unter dem Begriff "aufeinander zudrücken" verstanden werden, dass die Koppelvorrichtung eine Kraft auf das Wärmeableitelement und/oder das Wärmeabstrahlelement bewirkt, die auf das jeweils andere der Elemente hin gerichtet ist.

In einer vorteilhaften Ausbildung der Erfindung wird vorgeschlagen, dass die Koppelvorrichtung eine Presskraft auf die Dichtvorrichtung, insbesondere die Dichtfolie der Dichtvorrichtung, bewirkt, wodurch ein besonders geringer Wärmewiderstand zwischen dem Wärmeableitelement und dem Wärmeabstrahlelement und ein konstruktiv einfacher Schutz vor Staub und/oder Feuchtigkeit erreicht werden kann. Insbesondere soll unter der Wendung "eine Presskraft bewirken" in diesem Zusammenhang verstanden werden, dass die Koppelvorrichtung das Wärmeableitelement von einer ersten Seite und das Wärmeabstrahlelement von einer der ersten Seite abgewandten zweiten Seite gegen die Dichtvorrichtung, insbesondere gegen zumindest einen Teil der Dichtvorrichtung, vorteilhaft die Dichtfolie, drückt.

Des Weiteren wird vorgeschlagen, dass die Dichtvorrichtung zumindest eine Aussparung aufweist, durch die die Koppelvorrichtung wirkt, wodurch konstruktiv einfach eine stabile Befestigung möglich ist. Unter einer "Aussparung" soll insbesondere ein von der Dichtfolie begrenzter Bereich verstanden werden, durch den die Koppelvorrichtung das Wärmeableitelement mit dem Wärmeabstrahlelement verbindet. Vorzugsweise weist die Aussparung eine Fläche parallel zu einer Oberfläche der Dichtfolie kleiner als 5 cm², vorteilhaft kleiner als 1 cm², auf. Vorzugsweise wird die Aussparung von einem Loch und/oder einem Schlitz in der Dichtfolie der Dichtvorrichtung gebildet.

Ferner wird vorgeschlagen, dass die Koppelvorrichtung zumindest eine Schraube aufweist, die das Wärmeableitelement und das Wärmeabstrahlelement aufeinander zu drückt, wodurch konstruktiv einfach eine stabile Befestigung möglich ist.

Zudem wird vorgeschlagen, dass die Koppelvorrichtung zumindest ein Rastmittel aufweist, das das Wärmeableitelement und das Wärmeabstrahlelement aufeinander zu drückt, wodurch auf ein Verschrauben und/oder auf eine Aussparung in der Dichtvorrichtung verzichtet werden kann. Unter einem "Rastmittel" soll in diesem Zusammenhang insbesondere ein Mittel zur Herstellung einer mechanischen Verbindung verstanden werden, wobei das Rastmittel in eine Hinterschneidung eines zu dem Rastmittel korrespondierenden Mittels eingreift. Vorzugsweise wird das Rastmittel zum Eingreifen in die Hinterschneidung elastisch ausgelenkt. Alternativ könnte das Rastmittel durch ein anderes, dem Fachmann als sinnvoll erscheinendes Koppelmittel, beispielsweise eine Schraube, in der Hinterschneidung gehalten werden. Insbesondere ist das Rastmittel dazu vorgesehen, das Wärmeableitelement und das Wärmeabstrahlelement durch eine zumindest formschlüssige Verbindung aneinander zu befestigen.

Weiterhin wird vorgeschlagen, dass der Zellblock zumindest eine Akkuzelle und zumindest ein Befestigungsmittel aufweist, das die zumindest eine Akkuzelle zumindest in dem Wärmeableitelement befestigt, wodurch die Akkuzellen vorteilhaft vor mechanischen und elektrischen Einwirkungen geschützt in dem insbesondere metallischen Wärmeableitelement befestigt werden können, wobei Toleranzen des Wärmeableitelements vorteilhaft ausgeglichen werden können. Vorteilhaft befestigt zumindest das Befestigungsmittel die zumindest eine Akkuzelle zwischen zwei Wärmeableitelementen und/oder insbesondere zwischen einem Wärmeableitelement und dem Zellblockgehäuse. Insbesondere soll unter einer "Akkuzelle" eine Einheit verstanden werden, die dazu vorgesehen ist, eine chemisch gespeicherte Energie in eine elektrische Energie umzuwandeln. Vorzugsweise weist die Akkuzelle eine Anode, eine Kathode, einen Elektrolyt und ein Zellengehäuse auf. Unter einem "Befestigungsmittel" soll in diesem Zusammenhang ein Mittel verstanden werden, das dazu vorgesehen ist, eine Befestigungskraft direkt auf die zumindest eine Akkuzelle zu bewirken. Insbesondere ist das Befestigungsmittel direkt zwischen der zumindest einen Akkuzelle und dem Wärmeableitelements angeordnet. Vorzugsweise ist das Befestigungsmittel dazu vorgesehen, Toleranzen des Wärmeableitelements auszugleichen. Insbesondere ist das Befestigungsmittel dazu vorgesehen, die Akkuzelle elektrisch isoliert in dem Wärmeableitelement zu befestigen. Vorzugsweise weist das Befestigungsmittel ein gummielastisches Material auf. Vorzugweise weist das Befestigungsmittel zwischen der Akkuzelle und dem Wärmeableitelement, insbesondere auf einer Senkrechten einer Oberfläche der Akkuzelle, in zumindest einem Bereich eine Dicke zwischen 0,1 und 5 mm, vorteilhaft zwischen 0,2 und 2 mm, besonders vorteilhaft zwischen 0,5 und 1 mm, auf. Insbesondere ist das Befestigungsmittel dazu vorgesehen, mehrere Akkuzellen in dem Wärmeableitelement zu befestigen. Insbesondere ist das zumindest eine Befestigungsmittel dazu vorgesehen, mehrere Akkuzellen zwischen zwei Wärmeableitelementen zu befestigen.

Der erfindungsgemäße Akku soll hierbei nicht auf die oben beschriebene Anwendung und Ausführungsform beschränkt sein. Insbesondere kann der erfindungsgemäße Akku zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind fünf Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Darstellung eines erfindungsgemäßen Akkus mit einem Akkugehäuse, das Wärmeabstrahlelemente aufweist,
- Fig. 2: eine perspektivische Darstellung einer Dichtvorrichtung und eines Zellblocks des Akkus aus Figur 1,
- Fig. 3: einen ersten Schnitt A-A des Akkus aus Figur 1, der Wärmeableitelemente des Zellblocks zeigt,
- Fig. 4: einen zweiten Schnitt B-B senkrecht zu dem ersten Schnitt des Akkus aus Figur 3,
- Fig. 5: einen perspektivische dargestellten Scheibenschnitt eines Teils des Akkus aus Figur 1 in einer Explosionsdarstellung,
- Fig. 6: eine perspektivische Darstellung eines der Wärmeableitelemente des Akkus aus Figur 1,
- Fig. 7: ein alternatives Ausführungsbeispiel der Wärmeableitelemente des Akkus aus Figur 1,
- Fig. 8: ein weiteres alternatives Ausführungsbeispiel der Wärmeableitelemente und der Wärmeabstrahlelemente des Akkus aus Figur 1,
- Fig. 9: ein nächstes alternatives Ausführungsbeispiel der Wärmeableitelemente und der Wärmeabstrahlelemente aus Figur 1 und
- Fig. 10: noch ein alternatives Ausführungsbeispiel der Wärmeableitelemente und der Wärmeabstrahlelemente des Akkus aus Figur 1.

### Beschreibung der Ausführungsbeispiele

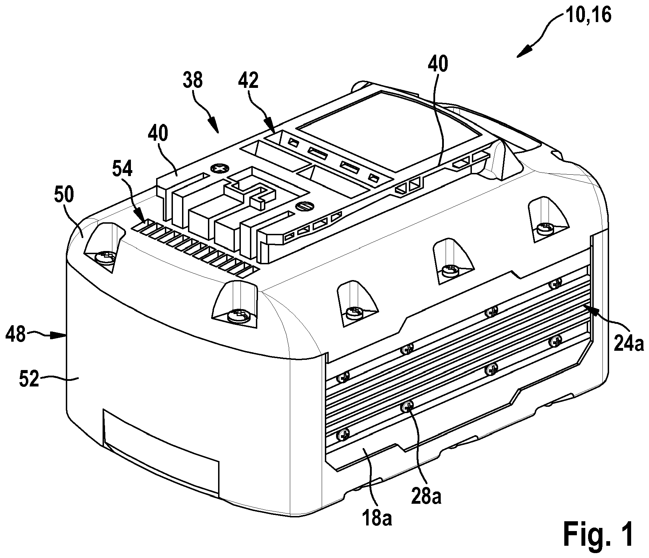

Figur 1 zeigt einen Akku 10, der als ein Werkzeugakku ausgebildet ist. Der Akku 10 weist einen Zellblock 12, ein Akkugehäuse 16, eine Dichtvorrichtung 20, eine Koppelvorrichtung 24a und eine Werkzeugschnittstelle 38 auf.

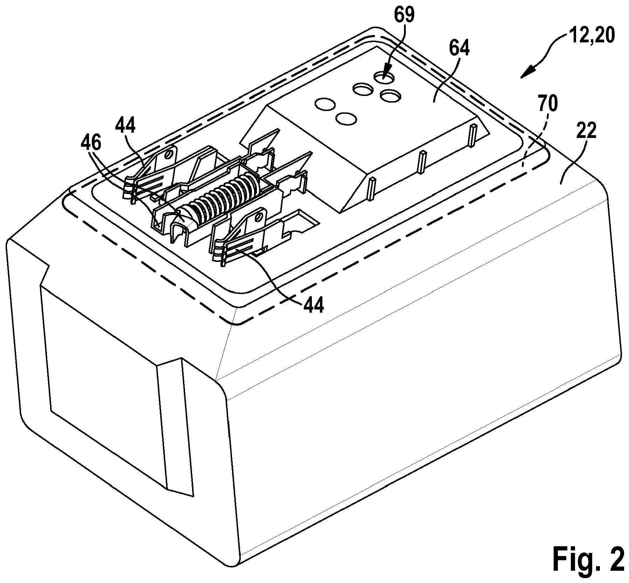

Die Werkzeugschnittstelle 38 ist dazu vorgesehen, eine mechanische und eine elektrische Verbindung mit einem Werkzeug herzustellen. Zur mechanischen Verbindung weist die Werkzeugschnittstelle 38 Führungsschienen 40 und ein Rastmittel 42 auf. Diese Elemente werden von dem Akkugehäuse 16 gebildet. Wie Figur 2 zeigt, weist die Werkzeugschnittstelle 38 zur elektrischen Verbindung Energiekontakte 44 und Kommunikationskontakte 46 auf. Diese Kontakte 44, 46 sind an dem Zellblock 12 angeordnet.

Das Akkugehäuse 16 weist einen Grundkörper 48 und ein Deckelelement 50 auf. Die Werkzeugschnittstelle 38 ist an dem Deckelelement 50 angeordnet. Das Deckelelement 50 bildet eine Oberseite des Akkus 10. Das Deckelelement 50 ist als ein Kunststoffteil ausgebildet. Das Deckelelement 50 weist eine Luftstromöffnung 54 auf, durch die ein Ladegerät einen Luftstrom in das Akkugehäuse 16 einblasen kann. Durch diese Luftstromöffnung 54 und durch weitere Spalte des Akkugehäuses 16 können Staub und/oder Feuchtigkeit in das Akkugehäuse 16 eindringen.

Der Grundkörper 48 weist ein Bodenelement 52 und zwei Wärmeabstrahlelemente 18a auf, von denen nur eines in Figur 1 dargestellt ist. Das Bodenelement 52 begrenzt den Akku 10 auf einer Unterseite, auf einer Vorderseite und auf einer Hinterseite, jeweils bezogen auf eine Koppelrichtung der Werkzeugschnittstelle 38. Zudem bildet das Bodenelement 52 vier an die Unterseite angrenzende Ecken. Das Bodenelement 52 ist als ein Kunststoffteil ausgebildet.

Die zwei Wärmeabstrahlelemente 18a begrenzen den Akku 10 jeweils auf einer Seite. Die Wärmeabstrahlelemente 18a sind als Aluminiumkörper ausgebildet. Die Wärmeabstrahlelemente 18a weisen an einer Außenseite Kühlrippen auf. Die Wärmeabstrahlelemente 18a, der Grundkörper 48 und das Deckelelement 50 sind miteinander verschraubt. Zusammen umschließen die Wärmeabstrahlelemente 18a, der Grundkörper 48 und das Deckelelement 50 den Zellblock 12 vollständig. Alternativ oder zusätzlich könnte ein Akku Wärmeabstrahlelemente, beispielsweise an der Vorderseite, an der Rückseite und/oder an der Unterseite, aufweisen.

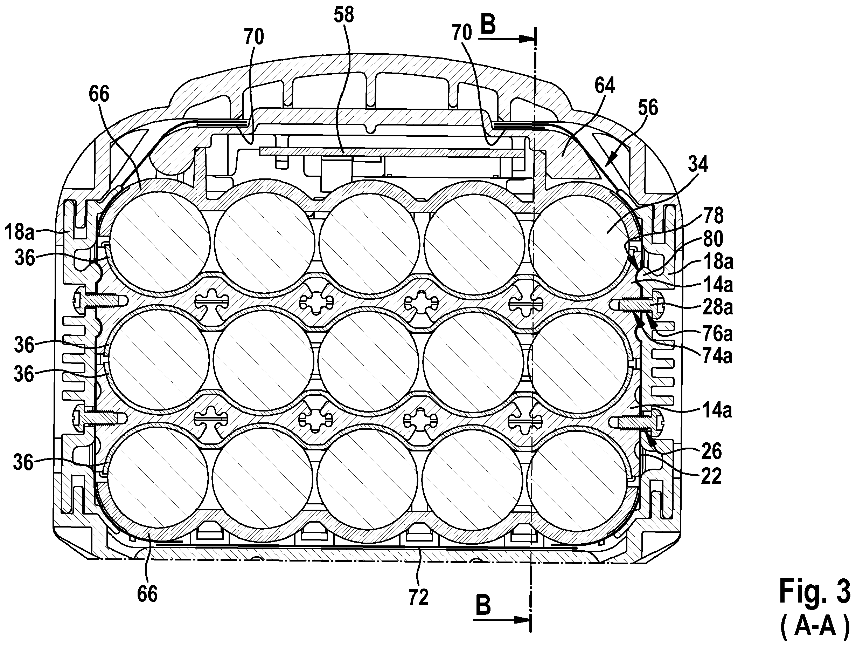

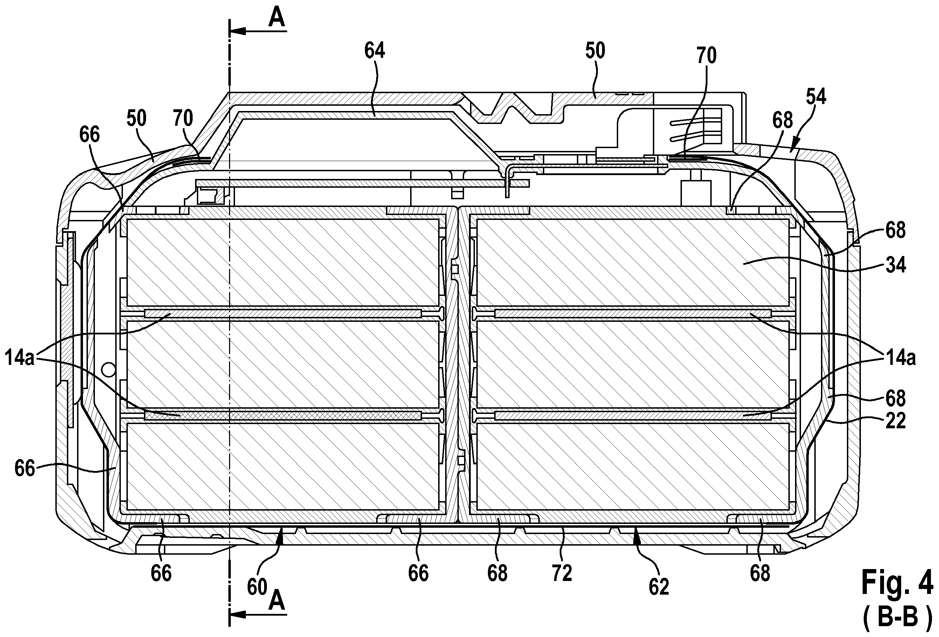

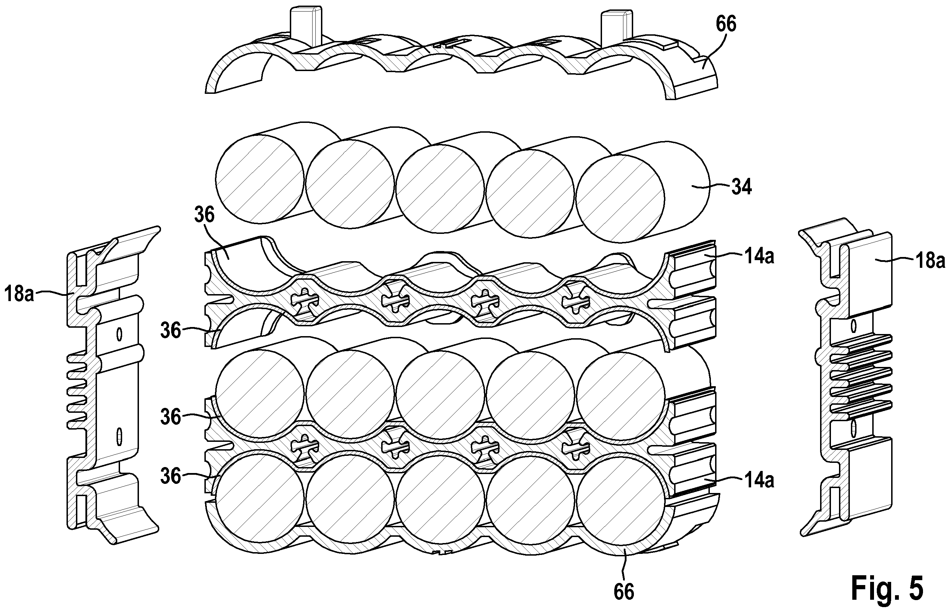

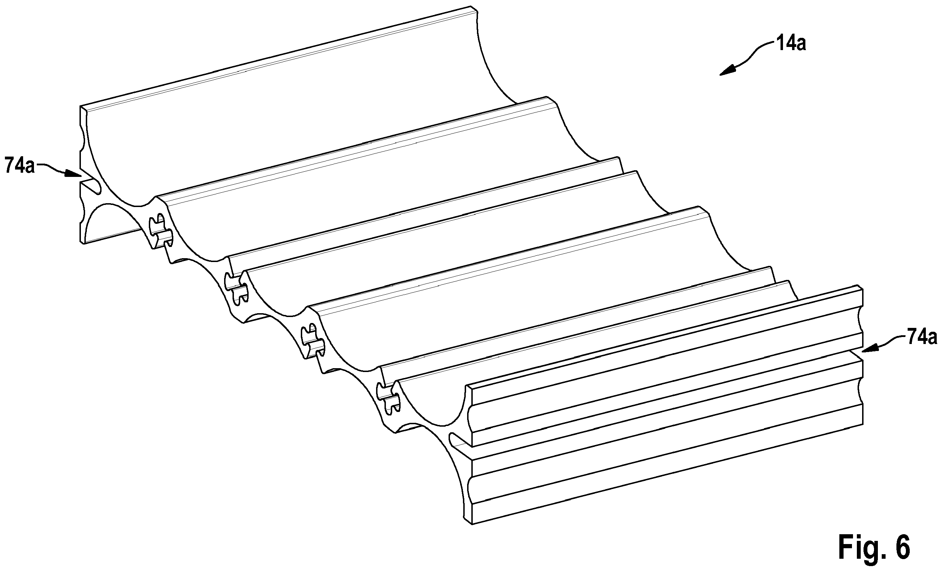

Wie die Figuren 2 bis 6 zeigen, weist der Zellblock 12 vier Wärmeableitelemente 14a, dreißig Akkuzellen 34, acht Befestigungsmittel 36, ein Zellblockgehäuse 56 und eine Elektronik 58 auf. Die Elektronik 58 ist dazu vorgesehen, Akkuspannungen und Temperaturen der Akkuzellen 34 zu überwachen und eine Beschädigung der Akkuzellen 34 zu vermeiden. Das Zellblockgehäuse 56 ist dazu vorgesehen, die Wärmeableitelemente 14a, die Akkuzellen 34, die Befestigungsmittel 36 und die Elektronik 58 zu einer Baugruppe zu verbinden, die den Zellblock 12 bildet.

Das Zellblockgehäuse 56 weist ein erstes Zellblockteilgehäuse 60, ein zweites Zellblockteilgehäuse 62 und ein Elektronikgehäuseteil 64 auf. Jedes der Zellblockteilgehäuse 60, 62 fasst zwei der Wärmeableitelemente 14a, fünfzehn der Akkuzellen 34 und vier der Befestigungsmittel 36 zu einer Unterbaugruppe der den Zellblock 12 bildenden Baugruppe zusammen. Jedes der Zellblockteilgehäuse 60, 62 ist aus mehreren, dem Fachmann als sinnvoll erscheinenden Gehäusemitteln 66, 68 zusammengesetzt.

Das Elektronikgehäuseteil 64 begrenzt einen Innenraum, in dem die Elektronik 58 angeordnet ist. Die Kontakte der Werkzeugschnittstelle 38, hier die Energiekontakte 44 und die Kommunikationskontakte 46, sind teilweise in das Elektronikgehäuseteil 64 eingegossen. Das Elektronikgehäuseteil 64 weist Klimatisierungsöffnungen 69 auf, die mit einer hier nicht näher dargestellten wasserdichten, atmungsaktiven Membran verschlossen sind.

Die Dichtvorrichtung 20 ist dazu vorgesehen, einen von dem Zellblockgehäuse 56 aufgespannten Raum des Zellblocks 12 abzudichten. Die Dichtvorrichtung 20 weist eine Dichtfolie 22, ein erstes Dichtmittel 70 und ein zweites Dichtmittel 72 auf. Die Dichtfolie 22 ist schlauchförmig ausgebildet. Alternativ könnte die Dichtfolie sackförmig ausgebildet sein. Die Dichtfolie 22 ist selbstschrumpfend ausgebildet. Die Dichtfolie 22 liegt an der Vorderseite, an der Hinterseite und an den beiden Lateralseiten an dem Zellblock 12 an. Die Dichtfolie 22 liegt an den Wärmeableitelementen 14a des Zellblocks 12 direkt flächig an.

Das erste Dichtmittel 70 ist als eine Dichtmasse ausgebildet. Hier ist das erste Dichtmittel 70 als ein Butyldichtstoff ausgebildet. Das erste Dichtmittel 70 ist dazu vorgesehen, einen Spalt zwischen dem Zellblockgehäuse 56 und der Dichtfolie 22 abzudichten. Hier dichtet das erste Dichtmittel 70 einen Spalt zwischen dem Elektronikgehäuseteil 64 und der Dichtfolie 22 ab. Somit verhindert das erste Dichtmittel 70 ein Eindringen von Staub und/oder Feuchtigkeit in den Zellblock 12.

Das zweite Dichtmittel 72 dichtet eine der Werkzeugschnittstelle 38 abgewandte Unterseite der Dichtfolie 22 ab. Das zweite Dichtmittel 72 ist als eine selbstklebende Folie ausgebildet. Das zweite Dichtmittel 72 verschließt eine der Werkzeugschnittstelle 38 abgewandte Öffnung der schlauchförmigen Dichtfolie 22. Somit umschließt die Dichtvorrichtung 20 den Zellblock 12 auf fünf Seiten. Die sechste Seite dichtet das Elektronikgehäuseteil 64 des Zellblockgehäuses 56 ab.

Die Wärmeableitelemente 14a erstrecken sich entlang einer Geraden durch den gesamten Zellblock 12. Auf zwei einander abgewandten Seiten der Wärmeableitelemente 14a sind die Akkuzellen 34 angeordnet. Die Wärmeableitelemente 14a begrenzen teilzylinderförmige Aussparungen, die dazu vorgesehen sind, die Akkuzellen 34 zumindest teilweise aufzunehmen. Zwischen den Wärmeableitelementen 14a und den Akkuzellen 34 ist jeweils eines der Befestigungsmittel 36 angeordnet. Die Befestigungsmittel 36 verhindern einen direkten Kontakt zwischen den Wärmeableitelementen 14a und den Akkuzellen 34. Die Befestigungsmittel 36 sind als elektrisch isolierende und zumindest teilelastische Schichtelemente ausgebildet.

Die Wärmeableitelemente 14a und die Wärmeabstrahlelemente 18a sind als voneinander getrennt ausgebildete Bauteile gebildet. Die Koppelvorrichtung 24a ist dazu vorgesehen, jeweils eines der Wärmeableitelemente 14a und eines der Wärmeabstrahlelemente 18a aufeinander zuzudrücken. Die Koppelvorrichtung 24a jeweils eines der Wärmeableitelemente 14a und eines der Wärmeabstrahlelemente 18a von zwei verschiedenen Seiten gegen die Dichtfolie 22. Somit bewirkt die Koppelvorrichtung 24a eine Presskraft auf die Dichtfolie 22 der Dichtvorrichtung 20. Dadurch liegen die Wärmeableitelemente 14a und die Wärmeabstrahlelemente 18a flächig an der Dichtfolie 22 an.

Bei einem Laden und einem Entladen in den Akkuzellen 34 entstehende Wärme leiten die Befestigungsmittel 36 zu den Wärmeableitelementen 14a. Die Wärmeableitelemente 14a leiten diese Wärme aus dem Zellblock 12 heraus zu der Dichtfolie 22. Die Dichtfolie 22 leitet einen wesentlichen Anteil der Wärme zu den Wärmeabstrahlelementen 18a. Einen weiteren Anteil der Wärme leiten Schrauben 28a der Koppelvorrichtung 24a zu den Wärmeabstrahlelementen 18a. Die Wärmeabstrahlelemente 18a geben die Wärme durch Abstrahlen und Konvektion an eine Umgebung des Akkus 10 ab.

Die Koppelvorrichtung 24a weist die Schrauben 28a, von den Wärmeableitelementen 14a begrenzte Nuten 74a, von den Wärmeabstrahlelementen 18a begrenzte Schraubaussparungen 76a, Positioniermittel 78 der Wärmeableitelemente 14a und Positioniermittel 80 der Wärmeabstrahlelemente 18a auf. Bei einer Montage werden jeweils eines der Wärmeableitelemente 14a und eines der Wärmeabstrahlelemente 18a mittels der Positioniermittel 78, 80 wie vorgesehen aufeinandergesetzt. Die Positioniermittel 78 der Wärmeableitelemente 14a sind als halbrunde Nuten ausgebildet. Die Positioniermittel 80 der Wärmeabstrahlelemente 18a sind als halbrunde Federn ausgebildet. Die Positioniermittel 78 der Wärmeableitelemente 14a und die Positioniermittel 80 der Wärmeabstrahlelemente 18a sind korrespondierend zueinander ausgebildet.

Anschließend werden die Schrauben 28a durch die Dichtfolie 22 in die Nuten 74a geschraubt. Dabei bilden sich Aussparungen 26 in der Dichtfolie 22 der Dichtvorrichtung 20. Die Schrauben 28a stanzen Löcher in die Dichtfolie 22. Die Dichtfolie 22 dichtet dabei einen Bereich um die Schrauben 28a ab. Zudem könnten zusätzliche Dichtmittel in einen Bereich der Aussparung 26 eingebracht werden. Die Schrauben 28a drücken jeweils eines der Wärmeableitelemente 14a und eines der Wärmeabstrahlelemente 18a zu einander.

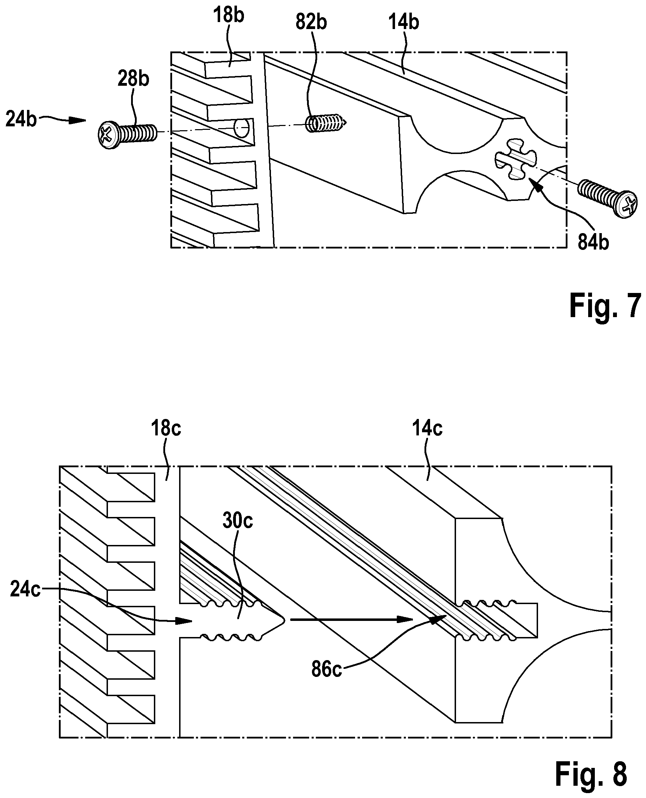

In den Figuren 7 bis 10 sind weitere Ausführungsbeispiele der Erfindung gezeigt. Die nachfolgenden Beschreibungen und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 6, verwiesen werden kann. Zur Unterscheidung der Ausführungsbeispiele ist der Buchstabe a den Bezugszeichen des Ausführungsbeispiels in den Figuren 1 bis 6 nachgestellt. In den Ausführungsbeispielen der Figuren 7 bis 10 ist der Buchstabe a durch die Buchstaben b bis e ersetzt.

Figur 7 zeigt ein Wärmeableitelement 14b, ein Wärmeabstrahlelement 18b und eine Koppelvorrichtung 24b eines Akkus 10, wie er ansonsten in dem Ausführungsbeispiel der Figuren 1 bis 6 beschrieben ist. Anstelle einer Nut weist das Wärmeableitelement 14b Sacklöcher 82b auf, in die Schrauben 28b der Koppelvorrichtung 24b des Akkus 10 greifen. Zudem könnten Wärmeabstrahlelemente oder andere, dem Fachmann als sinnvoll erscheinende Elemente in einem gezogenen Kanal 84b des Wärmeableitelements 14b verschraubt sein.

Figur 8 zeigt ein Wärmeableitelement 14c, ein Wärmeabstrahlelement 18c und eine Koppelvorrichtung 24c eines Akkus 10, wie er ansonsten in dem Ausführungsbeispiel der Figuren 1 bis 6 beschrieben ist. Die Koppelvorrichtung 24c weist ein von dem Wärmeabstrahlelement 18c gebildetes Rastmittel 30c auf. Das Rastmittel 30c ist tannenbaumförmig ausgebildet. Das Wärmeableitelement 14c bildet eine Rastaussparung 86c der Koppelvorrichtung 24c. Die Rastaussparung 86c weist Hinterschneidungen auf, in die Zweige des tannenbaumförmigen Rastmittels 30c verrasten. Eine nicht näher dargestellte Dichtfolie des Akkus 10 wird bei einem Verrasten der Koppelvorrichtung 24c in die Rastaussparung 86c hineingedrückt und zwischen dem Wärmeableitelement 14c und dem Wärmeabstrahlelement 18c verklemmt, bevor sie eine Aussparung bildet, durch die das Rastmittel 30c durch die Dichtfolie dringt. Somit dichtet die Dichtfolie zwischen dem Wärmeableitelement 14c und dem Wärmeabstrahlelement 18c ab.

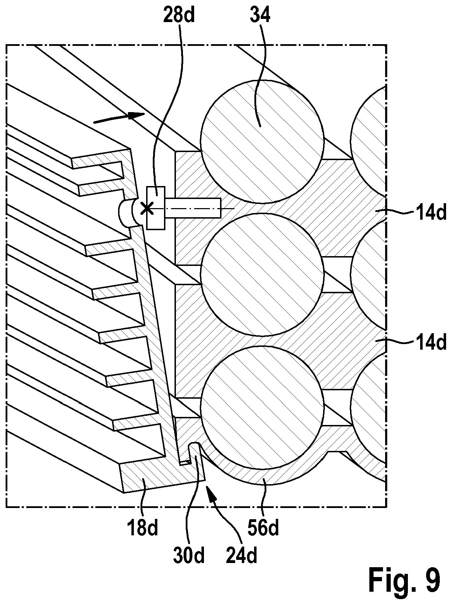

Figur 9 zeigt zwei Wärmeableitelemente 14d, ein Wärmeabstrahlelement 18d, eine Koppelvorrichtung 24d, ein Zellblockgehäuse 56d und Akkuzellen 34 eines Akkus 10, wie er ansonsten in dem Ausführungsbeispiel der Figuren 1 bis 6 beschrieben ist. Die Koppelvorrichtung 24d weist ein von dem Wärmeabstrahlelement 18d gebildetes Rastmittel 30d und Schrauben 28d auf. Das Rastmittel 30d greift in eine Hinterschneidung des Zellblockgehäuses 56d des Akkus 10. Alternativ könnte ein Rastmittel in eine Hinterschneidung eines Wärmeableitelements greifen. Die Schrauben 28d drücken das Wärmeableitelement 14d und das Wärmeabstrahlelement 18d aufeinander zu und fixieren das Rastmittel 30d in der Hinterschneidung.

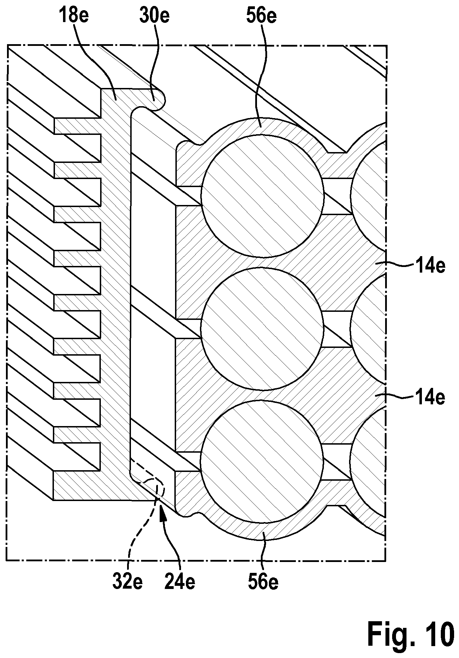

Figur 10 zeigt zwei Wärmeableitelemente 14e, ein Wärmeabstrahlelement 18e, eine Koppelvorrichtung 24e und ein Zellblockgehäuse 56e eines Akkus 10, wie er ansonsten in dem Ausführungsbeispiel der Figuren 1 bis 6 beschrieben ist. Die Koppelvorrichtung 24e weist zwei gegenläufig ausgerichtete, von dem Wärmeabstrahlelement 18e gebildete Rastmittel 30e, 32e auf. Die Rastmittel 30e, 32e greifen in Hinterschneidungen des Zellblockgehäuses 56e des Akkus 10. Alternativ könnte ein Rastmittel in eine Hinterschneidung eines Wärmeableitelements greifen. Die Rastmittel 30e, 32e drücken dabei durch eine nicht näher dargestellte Dichtfolie auf das Zellblockgehäuse 56e. Die Dichtfolie weist keine Aussparung auf, durch die die Koppelvorrichtung 24e wirkt.

## Patentansprüche

1. Akku, insbesondere Werkzeugakku, mit zumindest einem Zellblock (12), der zumindest ein Wärmeableitelement (14a-e) aufweist, das dazu vorgesehen ist, eine Wärme aus dem Zellblock (12) abzuleiten, und mit einem Akkugehäuse (16), das zumindest ein Wärmeabstrahlelement (18a-e) aufweist, das dazu vorgesehen ist, die von dem Wärmeableitelement (14a-e) abgeleitete Wärme an eine Umgebung wenigstens abzustrahlen, das Wärmeableitelement (14a-e) und das Wärmeabstrahlelement (18a-e) als voneinander getrennt ausgebildete Bauteile gebildet sind, **gekennzeichnet durch** eine Dichtvorrichtung (20), die dazu vorgesehen ist, den Zellblock (12) wenigstens staubdicht und/- oder wasserdicht zu verschließen, wobei die Dichtvorrichtung (20) eine den Zellblock (12) umschließende Dichtfolie (22) aufweist.

2. Akku nach Anspruch 1, **dadurch gekennzeichnet, dass** die Dichtvorrichtung (20) zumindest teilweise zwischen dem Wärmeableitelement (14a-e) und dem Wärmeabstrahlelement (18a-e) angeordnet ist.

3. Akku zumindest nach Anspruch 1, **dadurch gekennzeichnet, dass** die Dichtvorrichtung (20) zumindest teilweise direkt zwischen dem Wärmeableitelement (14a-e) und dem Wärmeabstrahlelement (18a-e) derart angeordnet ist, dass das Wärmeableitelement (14a-e) auf einer ersten Seite eines Bereichs der Dichtvorrichtung (20) und das Wärmeabstrahlelement (18a-e) auf einer der ersten Seite gegenüberliegenden zweiten Seite des Bereichs der Dichtvorrichtung (20) anliegen.

4. Akku zumindest nach Anspruch 1, **dadurch gekennzeichnet, dass** die Dichtvorrichtung (20) dazu vorgesehen ist, einen zumindest wesentlichen Anteil der Wärme von dem Wärmeableitelement (14a-e) auf das Wärmeabstrahlelement (18a-e) zu leiten.

5. Akku nach einem der vorhergehenden Ansprüche, **gekennzeichnet durch** eine Koppelvorrichtung (24a-e), die dazu vorgesehen ist, das Wärmeableitelement (14a-e) und das Wärmeabstrahlelement (18a-e) aufeinander zuzudrücken.

6. Akku zumindest nach Anspruch 5, **dadurch gekennzeichnet, dass** die Koppelvorrichtung (24a-e) eine Presskraft auf die Dichtvorrichtung (20) bewirkt.

7. Akku zumindest nach Anspruch 5, **dadurch gekennzeichnet, dass** die Dichtvorrichtung (20) zumindest eine Aussparung (26) aufweist, durch die die Koppelvorrichtung (24a-d) wirkt.

8. Akku zumindest nach Anspruch 5, **dadurch gekennzeichnet, dass** die Koppelvorrichtung (24a; 24b; 24d) zumindest eine Schraube (28a; 28b; 28d) aufweist, die das Wärmeableitelement (14a; 14b; 14d) und das Wärmeabstrahlelement (18a; 18b; 18d) aufeinander zu drückt.

9. Akku zumindest nach Anspruch 5, **dadurch gekennzeichnet, dass** die Koppelvorrichtung (24c-e) zumindest ein Rastmittel (30c-e; 32e) aufweist, das das Wärmeableitelement (14c-e) und das Wärmeabstrahlelement (18c-e) aufeinander zu drückt.

10. Akku nach einem der vorhergehenden Ansprüche, **dadurch gekennzeichnet, dass** der Zellblock (12) zumindest eine Akkuzelle (34) und zumindest ein Befestigungsmittel (36) aufweist, das die zumindest eine Akkuzelle (34) zumindest in dem Wärmeableitelement (14) befestigt.

11. Akku zumindest nach Anspruch 1, **dadurch gekennzeichnet, dass** die Dichtfolie (22) direkt flächig an dem zumindest einen Wärmeableitelement (14a) des Zellblocks (12) anliegt.

12. Akku zumindest nach Anspruch 1, **dadurch gekennzeichnet, dass** die Dichtfolie (22) als eine durch Wärmeeinwirkung selbstschrumpfende Folie ausgebildet ist.

13. Akku zumindest nach Anspruch 1, **dadurch gekennzeichnet, dass** das zumindest eine Wärmeableitelement (14a-e) und das zumindest eine Wärmeabstrahlelement (18a-e) flächig an der Dichtfolie (22) anliegen.

14. Akku zumindest nach Anspruch 1, **dadurch gekennzeichnet, dass** das zumindest eine Wärmeableitelement (14a-e) teilzylinderförmige Aussparungen begrenzt, die dazu vorgesehen sind, Akkuzellen (34) zumindest teilweise aufzunehmen.

## Claims

1. Rechargeable battery, in particular rechargeable tool battery, comprising at least one cell block (12) which has at least one heat-dissipating element (14a-e) which is provided for dissipating heat from the cell block (12), and comprising a rechargeable battery housing (16) which has at least one heat-emitting element (18a-e) which is provided for at least emitting the heat, which is dissipated by the heat-dissipating element (14a-e), to a surrounding area, the heat-dissipating element (14a-e) and the heat-emitting element (18a-e) being formed as components which are designed separately from one another, **characterized by** a sealing apparatus (20) which is provided for closing the cell block (12) at least in a dust-tight and/or water-tight manner, wherein the sealing apparatus (20) has a sealing film (22) which surrounds the cell block (12).

2. Rechargeable battery according to Claim 1, **characterized in that** the sealing apparatus (20) is arranged at least partially between the heat-dissipating element (14a-e) and the heat-emitting element (18a-e).

3. Rechargeable battery at least according to Claim 1, **characterized in that** the sealing apparatus (20) is arranged at least partially directly between the heat-dissipating element (14a-e) and the heat-emitting element (18a-e) in such a way that the heat-dissipating element (14a-e) bears on a first side of a region of the sealing apparatus (20) and the heat-emitting element (18a-e) bears on a second side of the region of the sealing apparatus (20), which second side is opposite the first side.

4. Rechargeable battery at least according to Claim 1, **characterized in that** the sealing apparatus (20) is provided for conducting an at least substantial proportion of the heat from the heat-dissipating element (14a-e) to the heat-emitting element (18a-e).

5. Rechargeable battery according to one of the preceding claims, **characterized by** a coupling apparatus (24a-e) which is provided for pushing the heat-dissipating element (14a-e) and the heat-emitting element (18a-e) towards one another.

6. Rechargeable battery at least according to Claim 5, **characterized in that** the coupling apparatus (24a-e) creates a pressing force on the sealing apparatus (20).

7. Rechargeable battery at least according to Claim 5, **characterized in that** the sealing apparatus (20) has at least one cutout (26) through which the coupling apparatus (24a-d) acts.

8. Rechargeable battery at least according to Claim 5, **characterized in that** the coupling apparatus (24a; 24b; 24d) has at least one screw (28a; 28b; 28d) which pushes the heat-dissipating element (14a; 14b; 14d) and the heat-emitting element (18a; 18b; 18d) towards one another.

9. Rechargeable battery at least according to Claim 5, **characterized in that** the coupling apparatus (24c-e) has at least one latching means (30c-e; 32e) which pushes the heat-dissipating element (14c-e) and the heat-emitting element (18c-e) towards one another.

10. Rechargeable battery according to one of the preceding claims, **characterized in that** the cell block (12) has at least one rechargeable battery cell (34) and at least one fastening means (36) which fastens the at least one rechargeable battery cell (34) at least in the heat-dissipating element (14).

11. Rechargeable battery at least according to Claim 1, **characterized in that** the sealing film (22) bears directly flat against the at least one heat-dissipating element (14a) of the cell block (12).

12. Rechargeable battery at least according to Claim 1, **characterized in that** the sealing film (22) is in the form of a film which is self-shrinking under the action of heat.

13. Rechargeable battery at least according to Claim 1, **characterized in that** the at least one heat-dissipating element (14a-e) and the at least one heat-emitting element (18a-e) bear flat against the sealing film (22).

14. Rechargeable battery at least according to Claim 1, **characterized in that** the at least one heat-dissipating element (14a-e) delimits partially cylindrical cutouts which are provided to at least partially receive rechargeable battery cells (34).

## Revendications

1. Accumulateur, notamment accumulateur pour outil, muni d'au moins un bloc d'éléments (12), qui comporte au moins un élément de dissipation thermique (14a-e) prévu pour dissiper une chaleur provenant du bloc d'éléments (12), et muni d'un boîtier d'accumulateur (16) comportant au moins un élément de rayonnement thermique (18a-e) prévu pour au moins rayonner la chaleur dissipée par l'élément de dissipation thermique (14a-e) vers un environnement, l'élément de dissipation thermique (14a-e) et l'élément de rayonnement thermique (18a-e) étant des composants réalisés de manière séparée l'un de l'autre, **caractérisé par** un dispositif d'étanchéité (20) qui est conçu pour fermer de manière étanche à au moins la poussière et/ou l'eau le bloc d'éléments (12), dans lequel le dispositif d'étanchéité (20) comporte un film d'étanchéité (22) enveloppant le bloc d'éléments (12).

2. Accumulateur selon la revendication 1, **caractérisé en ce que** le dispositif d'étanchéité (20) est au moins disposé partiellement entre l'élément de dissipation thermique (14a-e) et l'élément de rayonnement thermique (18a-e).

3. Accumulateur selon la revendication 1, **caractérisé en ce que** le dispositif d'étanchéité (20) est disposé au moins partiellement directement entre l'élément de dissipation thermique (14a-e) et l'élément de rayonnement thermique (18a-e) de manière à ce que l'élément de dissipation thermique (14a-e) soit disposé sur un premier côté d'une zone du dispositif d'étanchéité (20) et à ce que l'élément de rayonnement thermique (18a-e) soit disposé sur un deuxième côté de la zone du dispositif d'étanchéité (20) qui est opposé au premier côté.

4. Accumulateur selon la revendication 1, **caractérisé en ce que** le dispositif d'étanchéité (20) est conçu pour conduire au moins une partie notable de la chaleur depuis l'élément de dissipation thermique (14a-e) vers l'élément de rayonnement thermique (18a-e).

5. Accumulateur selon l'une quelconque des revendications précédentes, **caractérisé par** un dispositif de couplage (24a-e) qui est conçu pour comprimer l'un contre l'autre l'élément de dissipation thermique (14a-e) et l'élément de rayonnement thermique (18a-e).

6. Accumulateur selon la revendication 5, **caractérisé en ce que** le dispositif de couplage (24a-e) exerce une force de pression sur le dispositif d'étanchéité (20).

7. Accumulateur selon au moins la revendication 5, **caractérisé en ce que** le dispositif d'étanchéité (20) comporte un évidement (26) à travers lequel agit le dispositif de couplage (24a-d).

8. Accumulateur selon au moins la revendication 5, **caractérisé en ce que** le dispositif de couplage (24a ; 24b ; 24d) comporte au moins une vis (28a ; 28b ; 28d) qui comprime l'un contre l'autre l'élément de dissipation thermique (14a ; 14b ; 14d) et l'élément de rayonnement thermique (18a ; 18b ; 18d).

9. Accumulateur selon au moins la revendication 5, **caractérisé en ce que** le dispositif de couplage (24c-e) comporte au moins un élément d'encliquetage (30c-e ; 32e) qui comprime l'un contre l'autre l'élément de dissipation thermique (14c-e) et l'élément de rayonnement thermique (18c-e).

10. Accumulateur selon l'une quelconque des revendications précédentes, **caractérisé en ce que** le bloc d'éléments (12) comporte au moins un élément d'accumulateur (34) et au moins un moyen de fixation (36) qui fixe l'au moins un élément d'accumulateur (34) au moins dans l'élément de dissipation thermique (14).

11. Accumulateur selon au moins la revendication 1, **caractérisé en ce que** le film d'étanchéité (22) repose directement à plat sur l'au moins un élément de dissipation thermique (14a) du bloc d'éléments (12).

12. Accumulateur selon au moins la revendication 1, **caractérisé en ce que** le film d'étanchéité (22) est réalisé sous la forme d'un film auto-rétractable par effet thermique.

13. Accumulateur selon au moins la revendication 1, **caractérisé en ce que** l'au moins un élément de dissipation thermique (14a-e) et l'au moins un élément de rayonnement thermique (18a-e) reposent à plat sur le film d'étanchéité (22).

14. Accumulateur selon au moins la revendication 1, **caractérisé en ce que** l'au moins un élément de dissipation thermique (14a-e) délimite des évidements de forme partiellement cylindrique qui sont conçus pour recevoir au moins partiellement des éléments d'accumulateur (34).
